Europäisches Patentamt

**European Patent Office**

**Office européen des brevets**

(19)

(11) Publication number: **0 147 078**

**A2**

(12) **EUROPEAN PATENT APPLICATION**

(21) Application number: **84308274.4**

(22) Date of filing: **29.11.84**

(51) Int. Cl.⁴: **B 32 B 27/08**

(30) Priority: **23.12.83 US 564658**

(43) Date of publication of application:
**03.07.85 Bulletin 85/27**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Ashcroft Charles Ray**
**7581 Trotwood Lane Victor**
**New York 14564(US)**

(72) Inventor: **Kerr, Michael Lawrence**
**220 Stansell Street Newark**
**New York 14513(US)**

(74) Representative: **West, Alan Harry**
**Mobil Court 3 Clements Inn**
**London WC2A 2EB(GB)**

(54) An oriented film laminate and method of forming same.

(57) A method of forming a firmly bonded, oriented film laminate comprises preparing an intimate combination (I) of polypropylene and a maleic acid anhydride modified olefin polymer; forming a film laminate of at least one layer of said combination (I) with at least one layer of a polymer (II) selected from polyvinyl alcohol and an ethylene-vinyl alcohol copolymer; and effecting adhesion between the layers by orienting the film laminate.

EP 0 147 078 A2

F- 2642

## AN ORIENTED FILM LAMINATE AND METHOD OF FORMING SAME

The present invention relates to an oriented film laminate and method of forming same.

Although the water resistance and resistance to liquid permeation of polyolefins is well known, their resistance to gas permeability, for example, to oxygen is comparatively large. They are therefore not generally suitable for use as containers for foods or as wrappers for foods, medical compounds, beauty preparations and the like, unless modified for the exclusion of gases.

It is known from US Patent No. 4,064,315 that polymeric films derived from vinylidene chloride can be firmly bonded to a polypropylene layer if there is included within the polypropylene layer a proportion of a maleated polypropylene. Thus, this patent teaches a composite consisting of a coated polypropylene film wherein the coating consists of a multipolymer formed from vinylidene chloride and at least one other comonomer, said polypropylene film consisting of a layer formed from a blended mixture of from 90% to 99% by weight of isotatic polypropylene and from 10% to 1% by weight of a maleic acid anhydride-modified polypropylene. According to this patent, when the maleic anhydride modified polypropylene is compounded with polypropylene the adhesion of the heat seal coating to base film is improved to the extent that one step coating is a practical method of application, hence, the need for a primer is eliminated.

In attempting to extend the teaching of this patent to a combination of a barrier layer comprising of polyvinyl alcohol or an ethylene-vinyl alcohol copolymer and a layer of said modified isotatic polypropylene, it was found that a film structure of this type had virtually no layer-to-layer adhesion. The combination could be easily separated by hand-peeling.

It was discovered, however, that if the weakly bonded film combination were oriented, unexpectedly exceptional adhesion was thereby effected between the layers. Without the application of pressure in a direction normal to the film surface and employing a commercially available orientation apparatus, for example, a tenter frame excellent adherence between the two films was obtained without the employment of a primer film therebetween.

Accordingly, the present invention provides in one aspect a method of forming an oriented film laminate comprising the steps of forming an intimate combination (I) of polypropylene and a maleic acid anhydride modified olefin polymer; forming a film of at least one layer of said combination (I) with at least one layer of a polymer (II) selected from polyvinyl alcohol and an ethylene-vinyl alcohol copolymer; and effecting adhesion between the layers by orienting the film laminate.

In a further aspect, the invention resides in an oriented film laminate comprising at least one layer of an intimate combination (I) of polypropylene and a maleic acid anhydride modified polyolefin and at least one layer of a polymer (II) selected from polyvinyl alcohol and an ethylene-vinyl alcohol copolymer, the layers being adhesively bonded together.

In a preferred form of the above-defined structure, the film has a core layer of the combination (I) and surface layers of the polymer (II). It is, however, also within the contemplation of the present invention to have the reverse of the above structure; that is, a core layer of the polymer (II) and surface layers of the combination I. Preferred maleic acid anhydride modified polyolefins are the so-modified polyethylenes, polypropylenes and polybutylenes.

The present invention therefore provides an oriented film laminate comprising a moisture resistant polyolefin layer and a gas barrier layer of polyvinyl alcohol or an ethylene-vinyl alcohol copolymer without the employment of a discrete adhesive layer normally necessary in bonding these films together.

The maleated polyolefin additive used in combination (I) is derived from maleic acid or its anhydride, copolymerized with a polyolefin amd can be prepared by the process disclosed in for example, U.S. Patent No. 3,433,777. Preferably, the maleated polyolefin additive is present in the polypropylene in an amount between 0.1-10%, more preferably betweem 0.5-3%, by weight. Any polyolefin is contemplated for modification, e.g. polyethylene, polypropylene, and polybutylene. For example, a suitable maleated polypropylene is commercially available from Eastman Industrial Chemicals as Epolene (registered Trade Mark) E 43 and has the following characteristics: Ring and Ball softening point, 157°C; Penetration Hardness, ASTM D 5 needle under 100-g load for 5 seconds at 25°C, 0.1mm; Density at 25°C, 0.934; Acid No. 45; Brookfield Thermocel Viscosity, at 190°C, 370cP; Color, Gardner Scale 11, Molecular Weight, approximately 4500.

The ethylene-vinyl alcohol copolymer referred to herein can be obtained from any commercial source. For example, extrusion grade ethylene-vinyl alcohol copolymer is available under the name EVAL from Kuraray Company Ltd. of Japan. This material contains about 80% of vinyl alcohol.

The invention will now be illustrated by the following Examples and Comparative Examples.

### Comparative Example 1

Polypropylene resin was coextruded with an ethylene-vinyl alcohol copolymer (EVAL) to yield a cast film 35 mils (0.9mm) thick. The EVAL constituted approximately 15% of the thickness dimension of the film. A sample of this film was easily delaminated by peeling one layer away from the other. By orientation of the cast film on a tenter frame, five times in the machine direction and seven times in the transverse direction to yield a film approximately 1 mil (0.3mm) in thickness was formed. The resultant film was still easily delaminable.

### Comparative Example 2

A second laminate was formed by extruding polypropylene film and coating the cast film with a layer of polyvinyl alcohol. The coated film also was approximately 35 mils (0.9mm) thick with the polyvinyl alcohol layer constituting approximately 15% of the laminate thickness. The polyvinyl alcohol coating could be easily peeled from the unoriented base layer illustrating very little adhesion between the two layers. The laminate was then oriented in the same manner and to the same degree as in Example 1. The resulting oriented film could also be easily delaminated by handpeeling.

## Example 1

Approximately 5% by weight of the above-identified commercially available maleated polypropylene was uniformly melt blended into the same polypropylene resin employed in Comparative Examples 1 and 2.  This melt blend was coextruded with the EVAL of Comparative Example 1 to yield a cast film 35 mils (0.9mm) thick, again with the EVAL constituting approximately 15% of the thickness of the composite film.  Again, this composite had no meaningful adherence one layer to the other and could be easily hand-peel separated.  The composite was oriented as in Comparative Example 1 to a 1 mil (0.3mm) thick film having 5 times MDO and 7 times TDO.  The resulting oriented laminate had a comparatively high bonding strength of approximately 400 grams/inch (157 gm/cm).

## Example 2

Utilizing the maleated polypropylene/polypropylene blend of Example 1, a film of the same was cast extruded.  A layer of polyvinyl alcohol was coated on the cast sheet, again the polyvinyl alcohol constituting about 15% of the laminate thickness.  As in Comparative Example 2 the polyvinyl alcohol layer could be easily peeled from the maleated polypropylene/polypropylene film.  This composite was biaxially oriented to a thickness of approxiately 1 mil (0.3mm) by orienting 5 times MDO and 7 times TDO on a tenter frame.  After orientation the laminate had a strong bond between the layers in excess of 400 grams/inch (157gm/cm).

While Examples 1 and 2 show biaxial orientation of the film, it is to be understood that significant bonding of the two layers is effected by uniaxial orientation.  Thus, whether the films are oriented uniaxially, sequentially biaxially or simultaneously biaxially significant bonding occurs.

CLAIMS:

1.   A method of forming an oriented film laminate comprising the steps of forming an intimate combination (I) of polypropylene and a maleic acid anhydride modified olefin polymer; forming a film of at least one layer of said combination (I) with at least one layer of a polymer (II) selected from polyvinyl alcohol and an ethylene-vinyl alcohol copolymer; and effecting adhesion between the layers by orienting the film laminate.

2.   The method of claim 1 wherein said maleic anhydride modified olefin polymer is present in said polypropylene in an amount of from 0.1-10% by weight.

3.   The method of claim 1 wherein said maleic acid anhydride modified polymer is present in from 0.5-3% by weight.

4.   An oriented film laminate comprising at least one layer of an intimate combination (I) of polypropylene and a maleic acid anhydride modified polyolefin and at least one layer of a polymer (II) selected from polyvinyl alcohol and an ethylene-vinyl alcohol copolymer, the layers being adhesively bonded together.

5.   The laminate of claim 4 wherein the polyolefin of said maleated polyolefin is selected from polyethylene, polypropylene and polybutylene.

6.   The laminate of claim 4 wherein the polyolefin of said maleated polyolefin is polypropylene.